# EUROPEAN PATENT APPLICATION

(11) **EP 4 414 065 A1**
(43) Date of publication of application: **14.08.2024**
(21) Application number: 22907431.5
(22) Date of filing: 13.12.2022
(51) Int. Cl.: B01J 20/30

(54) **METHOD FOR MANUFACTURING GRANULATED BODIES FOR LITHIUM ADSORPTION**

(30) Priority: 17.12.2021 JP 2021205339
(71) Applicant: SUMITOMO METAL MINING CO., LTD., Tokyo 105-8716 (JP)
(72) Inventor: IKEDA, Osamu, Ehime 7920002 (JP); ASANO, Satoshi, Ehime 7920002 (JP); TAKANO, Masatoshi, Ehime 7920002 (JP); MATSUMOTO, Shin-ya, Ehime 7920002 (JP); KUDO, Yohei, Ehime 7920002 (JP); HEGURI, Shin-ichi, Ehime 7920002 (JP)
(74) Representative: Jones, Nicholas Andrew
(86) International application number: PCT/JP2022/045783
(87) International publication number: WO 2023/112907

(57) **Abstract**

To provide a method for producing granulated body for lithium adsorption that easily maintain their shapes with a high adsorption capability and more robust granulated body. The method for producing the granulated body for lithium adsorption includes a kneading step of kneading a powder of a lithium adsorbent precursor, an organic binder, and a hardening agent for accelerating hardening of the organic binder to obtain a kneaded material, a granulating step of granulating the kneaded material to obtain granulated body, and a baking step of baking the granulated body at 90°C or more and 120°C or less to obtain granulated body for lithium adsorption. This aspect allows obtaining the granulated body for lithium adsorption that easily maintain their shapes with a high adsorption capability and more robust granulated body.

## Description

### BACKGROUND

### 1. Technical Field

The present invention relates to a method for producing granulated body for lithium adsorption. More specifically, the present invention relates to a method for producing granulated body for lithium adsorption containing a lithium adsorbent precursor.

### 2. Related Art

In Tang Weiping, "Lithium Recovery System from Brine," [online], June 11, 2010, Kagawa Industry Support Foundation, [November 22, 2018], Internet (https://www.kagawaisf.jp/wp-content/uploads/2022/02/21tang.pdf), a lithium recovery system from a brine water is disclosed. This document discloses a process until high purity Li₂CO₃ is generated by adsorbing lithium from a brine water using a lithium adsorbent and desorbing the adsorbed lithium. This document describes that the adsorption of the lithium is performed by the column method.

Patent Document 1 discloses a method for producing formed bodies used in a column. This Patent Document 1 discloses the method for producing formed bodies from a lithium adsorbent precursor and an inorganic binder, such as alumina or silica, or a method for producing formed bodies from a lithium adsorbent precursor and an organic binder of chitin or polyvinyl chloride.

Patent Document 1: WO 2011/058841 A1

Non-Patent Document 1: Tang Weiping, "Lithium Recovery System from brine," [online], June 11, 2010, Kagawa Industry Support Foundation, [November 22, 2018], Internet (https://www.kagawa-isf.jp/wp-content/uploads/2022/02/21tang.pdf)

Nevertheless, in the case of the formed bodies using the inorganic binder produced by the method described in WO 2011/058841 A1, there is a problem that a specific surface area is reduced as sintering progresses, thereby reducing the adsorption capability.

In the case of the formed bodies using the organic binder produced by the method described in WO 2011/058841 A1, there is a problem that the organic binder dissolves in an elution step with an acidic liquid. Accordingly, there is a problem that a repeated use of the formed bodies collapses the formed bodies to reduce the adsorbent and obstruct the column with generated powder.

In consideration of the above-described circumstances, it is an object of the present invention to provide a method for producing granulated body for lithium adsorption that easily maintain their shapes with a high adsorption capability and more robust granulated body.

### SUMMARY

A method for producing granulated body for lithium adsorption according to a first invention includes: a kneading step of kneading a powder of a lithium adsorbent precursor, an organic binder, and a hardening agent for accelerating hardening of the organic binder to obtain a kneaded material; a granulating step of granulating the kneaded material to obtain granulated body; and a baking step of baking the granulated body at 90°C or more and 120°C or less to obtain granulated body for lithium adsorption.

The method for producing the granulated body for lithium adsorption according to a second invention, which is in the first invention, includes a drying step of drying the granulated body at 10°C or more and 60°C or less after the granulating step and before the baking step.

In the method for producing the granulated body for lithium adsorption according to a third invention, which is in the first invention or the second invention, the organic binder is copolyester.

In the method for producing the granulated body for lithium adsorption according to a fourth invention, which is in any one of the first invention to the third invention, the hardening agent is polyisocyanate.

In the method for producing the granulated body for lithium adsorption according to a fifth invention, which is in any one of the first invention to the fourth invention, the organic binder is 5 weight% or more and 20 weight% or less of the powder of the lithium adsorbent precursor.

According to the first invention, the kneading step of kneading by including the organic binder and the hardening agent and the baking step of baking the granulated body in the baking step to obtain the granulated body for lithium adsorption are included, and therefore, the granulated body for lithium adsorption that easily maintain their shapes with a high adsorption capability and robust granulated body can be obtained.

According to the second invention, the drying step of drying the granulated body at the predetermined temperature is provided before the baking step, and therefore, the granulated body can be put to the baking step with a small amount of water content in the granulated body, thereby obtaining more robust granulated body.

According to the third invention, the organic binder is copolyester, and therefore, the dissolution in the acidic liquid can be further reduced, thereby obtaining more robust granulated body.

According to the fourth invention, the hardening agent is polyisocyanate, and therefore, a bonding strength of the organic binder can be further increased, thereby obtaining more robust granulated body.

According to the fifth invention, the kneaded organic binder is 5 weight% or more and 20 weight% or less of the powder of the lithium adsorbent precursor, and therefore, an adsorption capability of the lithium adsorbent can be maintained at high.

### BRIEF DESCRIPTION OF DRAWINGS

Fig. 1 is a flowchart of a method for producing granulated body for lithium adsorption according to a first embodiment of the present invention;
Fig. 2 is a flowchart of a method for producing granulated body for lithium adsorption according to the second embodiment of the present invention;
Fig. 3 is a graph illustrating differences in lithium adsorption amount by binders; and
Fig. 4 is a graph illustrating transitions of reduced granulated body.

### DETAILED DESCRIPTION

The following describes embodiments of the present invention based on the drawings. However, the embodiments described below are to exemplarily describe methods for producing granulated body for lithium adsorption for embodying a technical idea of the present invention, and the present invention does not specify the method for producing granulated body for lithium adsorption to the following.

The method for producing the granulated body for lithium adsorption according to the present invention includes a kneading step of kneading a powder of a lithium adsorbent precursor, an organic binder, and a hardening agent for accelerating hardening of the organic binder to obtain a kneaded material, a granulating step of granulating the kneaded material to obtain granulated body, and a baking step of baking the granulated body at 90°C or more and 120°C or less to obtain granulated body for lithium adsorption.

The method for producing the granulated body for lithium adsorption includes the kneading step of kneading by including the organic binder and the hardening agent and the baking step of baking the granulated body in the baking step to obtain the granulated body for lithium adsorption, and therefore, the granulated body for lithium adsorption that is high in adsorption capability and easily maintain the shapes of the granulated body can be obtained.

The method for producing the granulated body for lithium adsorption according to the present invention preferably further includes a drying step of drying the granulated body at 10°C or more and 40°C or less after the granulating step and before the baking step. This allows putting the granulated body to the baking step with a small amount of water content in the granulated body, thereby obtaining more robust granulated body.

In the method for producing the granulated body for lithium adsorption according to the present invention, the organic binder is preferred to be copolyester. This allows further reducing the dissolution in the acidic liquid, thereby obtaining further robust granulated body.

In the method for producing the granulated body for lithium adsorption according to the present invention, the hardening agent is preferred to be polyisocyanate. This allows further increasing a bonding strength of the organic binder, thereby obtaining further robust granulated body.

In the method for producing the granulated body for lithium adsorption according to the present invention, the organic binder is preferred to be 5 weight% or more and 20 weight% or less of the powder of the lithium adsorbent precursor. This allows maintaining an adsorption capability of the lithium adsorbent at high.

### <First Embodiment>

### (Lithium Adsorbent Precursor)

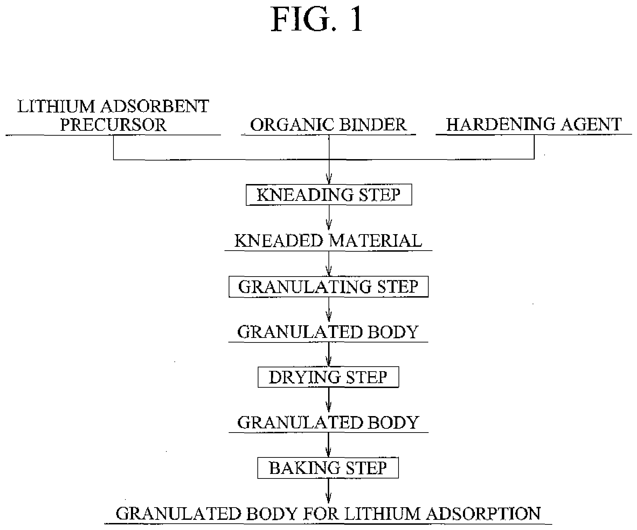

In a kneading step, a powder of a lithium adsorbent precursor, an organic binder, and a hardening agent for accelerating to harden this organic binder are kneaded to obtain a kneaded material. The lithium adsorbent precursor used in this kneading step will be described. Note that Fig. 1 illustrates a flowchart of a method for producing granulated body for lithium adsorption according to a first embodiment of the present invention. The powder of the lithium adsorbent precursor is used in the kneading step.

The lithium adsorbent is not specifically limited as long as it selectively adsorbs lithium from a solution that contains the lithium. For example, H_{1.6}Mn_{1.6}O₄, H_{1.33}Mn_{1.67}O₄, and the like obtained from lithium manganese oxide correspond to the lithium adsorbent. The lithium adsorbent can be obtained by substituting Li and hydrogen from Li_{1.6}Mn_{1.6}O₄ and Li_{1.33}Mn_{1.67}O₄ as the lithium adsorbent precursor as described in Formula 1 and Formula 2.

[Formula 1] Li_{1.6}Mn_{1.6}O₄ + 1.6HCl → H_{1.6}Mn_{1.6}O₄ + 1.6LiCl

[Formula 2] Li_{1.33}Mn₁.₆₇O₄ + 1.33HCl → H_{1.33}Mn_{1.67}O₄ + 1.33LiCl

Note that, when the lithium adsorbent precursor is Li_{1.6}Mn_{1.6}O₄, Li_{1.33}Mn_{1.67}O₄, or the like, it is preferred to fire the powder of the lithium adsorbent precursor at approximately 500°C in order to change divalent manganese to tetravalent manganese.
This is because the tetravalent manganese is less likely to dissolve in water, and thus, the dissolution of the manganese in the elution step to which the granulated body for lithium adsorption is put can be reduced.

### (Organic Binder)

The organic binder is used in the kneading step. For example, copolyester as one of polyesters, chitin, PVC, and the like correspond to the organic binder, and the copolyester is preferred. The organic binder being the copolyester allows further reducing the dissolution in an acidic liquid, thereby obtaining the even more robust granulated body.

### (Hardening Agent)

The hardening agent is used in the kneading step. The hardening agent is used for accelerating to harden the organic binder. "Accelerating to harden" means for the organic binder to have a further enhanced effect as a binder, such as to have a harder finish and to have faster hardening. There are a variety of hardening agents, and polyisocyanate is preferred. Furthermore, hexamethylene diisocyanate-based polyisocyanate is preferred. The hardening agent being the polyisocyanate allows further increasing a bonding strength of the organic binder, thereby obtaining the even more robust granulated body.

### (Kneading Step)

When a producing method for obtaining a lithium containing solution, which contains lithium, from the lithium adsorbent is achieved on a commercial basis, the most appropriate method is to granulate the lithium adsorbent and then house it within a predetermined container, and pass an acid solution, such as hydrochloric acid, in the container. In this case, the lithium adsorbent precursor needs to be granulated. The present invention relates to a producing method for obtaining granulated body for lithium adsorption from a lithium adsorbent precursor.

The method for producing the granulated body for lithium adsorption according to the embodiment has the kneading step. In this kneading step, the powder of the lithium adsorbent precursor, the organic binder, and the hardening agent are kneaded to obtain the kneaded material. In the kneading step, when the powder of the lithium adsorbent precursor, the organic binder, and the hardening agent are kneaded, it is preferred that a liquid, such as water, is added.

An amount of the organic binder used in the kneading step is preferred to be 5 weight% or more and 20 weight% or less of the powder of the lithium adsorbent precursor. When it is less than 5 weight%, the organic binder is too less and it does not bond. When it is more than 20 weight%, a proportion of the lithium adsorbent precursor contained in the granulated body in a final form is decreased, and it is not possible to obtain a predetermined adsorption capability. The amount of the organic binder falling within the above-described range allows maintaining the adsorption capability of the lithium adsorbent at high. For an amount of the hardening agent, it is preferred that a preferable amount with respect to the organic binder is determined.

### (Granulating Step)

As shown in Fig. 1, in the granulating step, the kneaded material obtained in the kneading step is granulated to obtain the granulated body. A size of the granulated body is not specifically limited, but it is preferred that the granularity of the granulated body is 0.5 mm or more and 1.5 mm or less such that the granulated body for lithium adsorption that will be consequently obtained will be 0.5 mm or more and 1.5 mm or less. Whether the granularity of the granulated body according to the embodiment falls within the specific range or not can be verified, specifically, using a sieve with a mesh size corresponding to each granularity conforming to Japanese Industrial Standard Z8801. Note that it is not necessary that all the granulated body have this granularity, and it is no problem as long as a preliminarily determined proportion is met. For example, it is preferred that the determined proportion is 90% or more. When the granularity is 0.5 mm or more, the granulated body is less likely to be clogged in the container, and thus, an increase in pressure loss in the container can be inhibited when the granulated body of the present invention is filled in the container and is passed with water. While when the granularity is larger than 1.5 mm, the adsorption rate of lithium becomes slow and the adsorption efficiency becomes poor, the granularity of 1.5 mm or less can allow a high adsorption performance.

In the granulating step, extruding is first performed, and the extruded objects are made into the granulated body by, for example, agitation and mixing granulation, rolling granulation, extrusion granulation, crushing granulation, fluidized bed granulation, spray-drying granulation (spray-dry), and compression granulation. The objects as they were extruded have corners in their shapes, and therefore, removing the corners by the granulation allows reduced generation of fractions caused by damage when they are filled in a column and used. The granulated body is preferred to have a spherical shape. Having the spherical shape reduces pulverization caused by contacts of the granulated body since they do not have edges.

The granularity of the granulated body for lithium adsorption falling within 0.5 mm or more and 1.5 mm or less allows further increasing a contact area between the granulated body for lithium adsorption and the lithium contained in the lithium containing solution and allows preventing obstruction of the column.

### (Drying Step)

As shown in Fig. 1, in this embodiment, the granulated body obtained in the granulating step is dried for a preliminarily determined period at 10°C or more and 60°C or less. The granulated body is thus dried so as to allow being put to a baking step with a small amount of water content in the granulated body, thereby obtaining the more robust granulated body.

The temperature of the drying step is preferred to be a room temperature. For example, it is more preferred to be 20°C or more and 30°C or less. The preliminarily determined period is preferred to be, for example, 20 hours or more and 30 hours or less.

### (Baking Step)

As shown in Fig. 1, in the sintering step, the granulated body obtained in the granulating step and undergone the drying step is baked to obtain the granulated body for lithium adsorption. The granulated body is baked by, for example, retaining a preliminarily determined temperature in an electric furnace for a preliminarily determined period, and thus, turns into the granulated body for lithium adsorption. For these temperature and period, optimal values are determined by the used organic binder and hardening agent.

The temperature is preferred to be 90°C or more and 120°C or less, and more preferably, 100°C or more and 110°C or less. The retention period is preferred to be 0.5 hours or more and 2 hours or less.

### (Process after Baking Step and before Desorption Step)

The granulated body for lithium adsorption produced by the above-described method for producing the granulated body for lithium adsorption is preferred to have the readily-soluble divalent manganese washed away by acid pickling or have hexavalent and heptavalent manganese washed away by alkaline cleaning before a subsequent desorption step that turns the lithium adsorbent precursor into the lithium adsorbent. For example, the acid pickling is preferred to be performed using hydrochloric acid of 1 mol/L having an amount of approximately fifteen times an amount of the lithium adsorbent precursor. The alkaline cleaning is preferred to be performed by immersion in a lithium hydroxide solution of 1 mol/L for one hour. In this case, the lithium hydroxide solution is preferred to have an amount of six times an amount of the lithium adsorbent precursor. After the alkaline cleaning is terminated, it is preferred to perform deionized water cleaning and drying.

### <Second Embodiment>

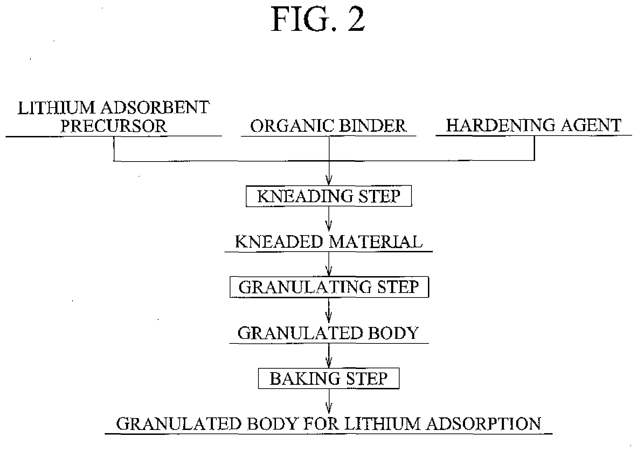

Fig. 2 illustrates a flowchart of a method for producing granulated body for lithium adsorption according to a second embodiment of the present invention. This embodiment differs from the first embodiment in that the drying step provided between the granulating step and the baking step is omitted. Others are the same as the first embodiment, and therefore, are not further elaborated.

In this embodiment, the granulated body obtained in the granulating step is put to the baking step without undergoing the drying step. In this case, in order to reduce the water content in the granulated body, the material in the kneading step is adjusted and the temperature or the period in the baking step is adjusted.

### <Examples>

While the following describes specific examples of the method for producing the granulated body for lithium adsorption according to the present invention, the present invention is not limited to these examples.

### <Example 1>

### (Kneading Step)

900g of lithium manganese oxide Li_{1.6}Mn_{1.6}O₄ powder as the lithium adsorbent precursor was added into a kneading machine, and the kneading machine had been rotated. Next, 451 g of a water-dispersion polyester resin (Vylonal MD-1500 manufactured by TOYOBO: copolyester content rate 30%) as the organic binder and 29 g of hexamethylene diisocyanate-based polyisocyanate (manufactured by Asahi Kasei Corp.: DURANATE WM44-L70G: blocked polyisocyanate content rate 60 to 70%) as a hardening agent were respectively weighted and added into the kneading machine. In this case, the organic binder is 135.3g, which is 30% of 451 g, and is 15.03 weight% of 900g of lithium manganese oxide powder. The above-described mixed powder was rotated for 15 to 20 minutes in the kneading machine, and was mixed until the organic binder was entirely mixed to make a small amount of lump, and thus, the kneaded material was obtained.

### (Granulating Step)

The kneaded material obtained by the kneading step was added into a granulating machine, and formed bodies in a cylindrical shape with a diameter of approximately 1 mm and a length of 1 mm were obtained. These formed bodies were added into a rolling granulation machine in rotation to undergo rolling granulation (granulation) for approximately 3 to 10 seconds, and granulated body of a diameter of approximately 1 mm were obtained.

### (Drying Step)

The granulated body obtained in the granulating step were bedded in a tray and were dried naturally for approximately one day under a normal temperature.

### (Baking Step)

The granulated body having undergone the drying step was subject to a heating process for 0.5 hours at a temperature of 90°C in an electric furnace, underwent a hardening process of the organic binder and the like, and thus, the granulated body for lithium adsorption was obtained.

### (Desorption Step)

The granulated body for lithium adsorption having undergone the baking step was packed in a column, and was desorbed with hydrochloric acid of 0.5 mol/L. After the desorption, the column was passed with deionized water and cleaned, and thus, residual hydrochloric acid was removed.

### (Adsorption Step)

After undergoing the desorption step, the column packed with the granulated body for lithium adsorption was passed with a salt lake brine having a predetermined lithium concentration, and the lithium adsorbent contained in the granulated body for lithium adsorption adsorbed Li contained in the salt lake brine. After passing the salt lake brine, deionized water was passed through the column to remove the residual salt lake brine.

### (Elution Step)

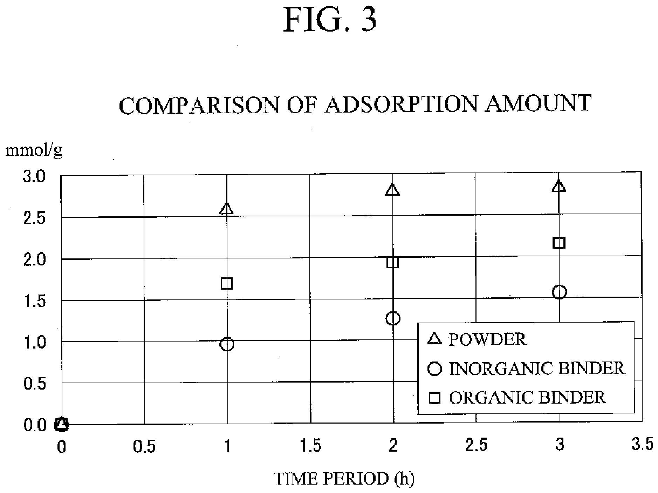

After the adsorption step, the column packed with the granulated body for lithium adsorption was passed with hydrochloric acid of 0.5 mol/L to elute the lithium adsorbed to the lithium adsorbent. Fig. 3 illustrates a graph of a lithium amounts eluted in the elution step. The horizontal axis in Fig. 3 indicates a period, and the vertical axis indicates a molar quantity of the lithium obtained with respect to the weight of the lithium adsorbent. The result of Example 1 is indicated by squares.

### (Repeat)

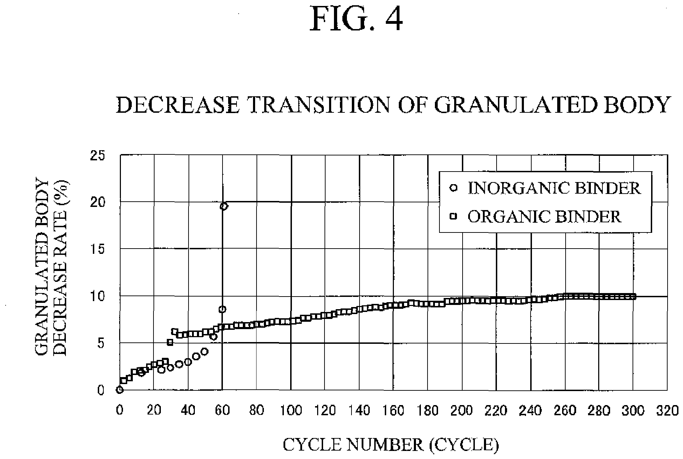

After performing the elution step, the column packed with the granulated body for lithium adsorption was used as it was, and the adsorption step and the elution step were repeatedly performed. Fig. 4 illustrates a proportion of those that failed to maintain their forms among the granulated body for lithium adsorption. The horizontal axis in Fig. 4 is a cycle number, and the vertical axis indicates the proportion of those that failed to maintain their forms among the granulated body for lithium adsorption, that is, a decrease rate of the granulated body. The result of Example 1 using the copolyester is indicated by squares.

### <Comparative Example 1>

### (Kneading Step)

800g of lithium manganese oxide Li_{1.6}Mn_{1.6}O₄ powder as a lithium adsorbent precursor and 200 g of alumina as an inorganic binder were respectively weighted, and were put into a vinyl bag and mixed in advance. This 1000 g of mixture powder was added into a kneading machine, and the kneading machine was rotated while adding water. The kneading machine was rotated for a few minutes to entirely mix the water, and thus the kneaded material was obtained.

### (Granulating Step)

The kneaded material obtained in the kneading step was added to an extruder, and cylindrically-shaped formed bodies with a diameter of approximately 1 mm to 3 mm were obtained from holes. The formed pellets were cut to lengths of 3 mm to 6 mm.

### (Drying Step)

The formed bodies obtained in the granulating step were bedded in a tray, and were dried for approximately one day in a dryer at 80°C or more.

### (Sintering Step)

The formed bodies undergone the drying step were sintered at 500°C for 1.5 h in an electric furnace to obtain sintered granulated body.

### (Desorption Step)

The sintered granulated body was packed in a column, and was desorbed with hydrochloric acid of 1 mol/L. After the desorption, the column was passed with deionized water and cleaned to remove the residual hydrochloric acid.

### (Adsorption Step)

After undergoing the desorption step, the column packed with the sintered granulated body was passed with a salt lake brine having a predetermined lithium concentration, and the lithium adsorbent contained in the granulated body for lithium adsorption adsorbed Li contained in the salt lake brine. After passing the salt lake brine, deionized water was passed through the column to remove the residual salt lake brine.

### (Elution Step)

After the adsorption step, the column packed with the sintered granulated body was passed with hydrochloric acid of 1 mol/L to elute the lithium adsorbed to the lithium adsorbent. Fig. 3 illustrates a lithium amount eluted in this elution step. The result of Comparative Example 1 is indicated by circles. In addition, the case where the lithium is adsorbed in the state of the lithium adsorbent powder is indicated by triangles for reference.

From Fig. 3, the adsorption capability of the granulated body for lithium adsorption using the copolyester as the organic binder has an adsorption amount of approximately 2 mmol with respect to 1 g of lithium adsorbent precursor and is worse than that of the powder state, on the other hand, the sintered granulated body using alumina as the inorganic binder has an adsorption amount of approximately 1.3 mmol/g, and thus, it is seen that the granulated body for lithium adsorption using the organic binder has the absorbing force higher than that of the inorganic binder.

### (Repeat)

After performing the elution step, the column packed with the sintered granulated body was used as it was, and the adsorption step and the elution step were repeatedly performed. Fig. 4 illustrates a proportion of those that failed to maintain their forms among the sintered granulated body. The result of Comparative Example 1 using the alumina is indicated by circles.

As shown in Fig. 4, the sintered granulated body formed by an inorganic alumina binder gradually proceeded to decay from around after 50 cycles and ended up rapidly proceeding to decay after 60 cycles. Meanwhile, the granulated body for lithium adsorption using the copolyester had its decrease rate at 10% even when 300 cycles were reached, and thus, it was evident that the decay was hardly proceeded.

## Claims

1. A method for producing granulated body for lithium adsorption comprising:
a kneading step of kneading a powder of a lithium adsorbent precursor, an organic binder, and a hardening agent for accelerating hardening of the organic binder to obtain a kneaded material;
a granulating step of granulating the kneaded material to obtain granulated body; and
a baking step of baking the granulated body at 90°C or more and 120°C or less to obtain granulated body for lithium adsorption.

2. The method for producing the granulated body for lithium adsorption according to claim 1, comprising
a drying step of drying the granulated body at 10°C or more and 60°C or less after the granulating step and before the baking step.

3. The method for producing the granulated body for lithium adsorption according to claim 1 or 2, wherein
the organic binder is copolyester.

4. The method for producing the granulated body for lithium adsorption according to any one of claims 1 to 3, wherein
the hardening agent is polyisocyanate.

5. The method for producing the granulated body for lithium adsorption according to any one of claims 1 to 4, wherein
the organic binder is 5 weight% or more and 20 weight% or less of the powder of the lithium adsorbent precursor.
